# EUROPEAN PATENT APPLICATION

(11) **EP 4 826 246 A1**
(43) Date of publication of application: **21.10.2026**
(21) Application number: 25382393.4
(22) Date of filing: 16.04.2025
(51) Int. Cl.: F03D 80/00, F03D 80/50

(54) **WIND TURBINE DRIVETRAIN, WIND TURBINE AND METHOD FOR OPERATING A WIND TURBINE**

(71) Applicant: Siemens Gamesa Renewable Energy Innovation & Technology S.L., 31621 Sarriguren (Navarra) (ES)
(72) Inventor: Durand, Mickael, 31620 Gorraiz (ES)
(74) Representative: SGRE-Association

(57) **Abstract**

The invention relates to a wind turbine drive train (7) for transmitting torque from a rotor hub (4) to a generator (9) comprising a rotor shaft (11), a low-speed lock (21) acting on the rotor hub (4) or on the rotor shaft (11), a gearbox (8), a high-speed shaft (10), and a high-speed lock (20) acting on the high-speed shaft (10) or on the generator (9), wherein the high-speed lock (20) is configured to fix the rotor hub (4) in multiple different rotor lock positions, wherein the low-speed lock (21) is configured to fix the rotor hub (4) in at most two different rotor positions.

## Description

The present invention relates to a wind turbine drivetrain for transmitting torque from a rotor to a generator. The present invention further relates to a wind turbine comprising said wind turbine drive train. The present invention further relates to a method for operating a wind turbine.

Wind turbines are increasingly used for the generation of electrical energy. A wind turbine typically comprises a tower and a nacelle mounted on the tower, to which a rotor is attached. The rotor is coupled to a generator via the so called drive train. The rotor comprises a plurality of rotor blades extending from the central rotor hub. The blades are oriented in such a way that wind passing over the blades turns the rotor and rotates the rotor shaft, thereby driving the generator to generate electricity.

Wind turbines are in continuous development due to advancements in technology and energy harvesting. Hence, new-generation wind turbines have increased in size compared to older ones. In the majority of modern large wind turbines, a gearbox is arranged between the wind rotor and the generator to reduce the large torque on the rotor side by increasing the speed on the generator side. The wind turbine drive train is one of the components which has greatly increased in size as the increased rotor torque and rotor power must be transmitted by the drive train.

During the twenty to thirty years lifetime of a wind turbine, regular service and maintenance work has to be performed on many components like the rotor blades, the blade angle adjustment system (also called pitch system) usually installed inside the rotor hub, and on subcomponents of the drive train like couplings, bearings and the gearbox. Due to health and safety requirements, service work on rotatable components may only be performed if the rotating components are safely locked or fixed relative to the nacelle.

To this purpose, rotor locks are known in the state of the art. Due to the increasing size of the rotor, the rotor lock needs to be designed for tremendous loads, leading to large and heavy rotor locks which can only be operated with complicated procedures and usually hydraulic actuators.

It is therefore an object of the invention to provide an improved design of a wind turbine drive train avoiding the disadvantages of the state of the art. It is in particular an object of the invention to reduce the size and the weight of a drive train of a wind turbine and to improve the maintainability of a wind turbine drive train.

This is achieved by a wind turbine drive train according to claim 1, a wind turbine according to claim 9 and a method of operating a wind turbine according to claim 10.

According to the invention, a wind turbine drive train for transmitting torque from a rotor hub to a generator comprises a rotor shaft, a low-speed lock acting on the rotor hub or on the rotor shaft, a gearbox, a high-speed shaft and a high-speed lock acting on the high-speed shaft or on the generator. The high-speed lock is configured to fix the rotor hub in multiple different rotor lock positions.

The low-speed lock is configured to fix the rotor hub in at most two different rotor positions, preferably exactly one single rotor lock position.

The rotor shaft is the input shaft of the gearbox, and the rotor shaft is rotating at the same speed as the rotor hub.

The high speed shaft is the output shaft of the gearbox and in a preferred embodiment, the high speed shaft is rotating at the same speed as the generator.

In one embodiment, to fix a rotating part means to establish a safe connection between the rotating part and the nacelle of the wind turbine which allows no rotation movement between the rotating part and the nacelle except for elastic deformations of the parts involved in the fixing. In a preferred embodiment, fixing means to establish a form fit or a form-locking connection in the lock, which might be the low-speed lock or the high-speed lock, as this is the safest way to fix a rotating part to the nacelle. The wording fixing a rotating part and locking a rotating part are used as synonyms.

The rotor lock position is the position of the rotor hub when turning around its rotation axis which is the rotor axis. If as an example a rotor blade is named first rotor blade, this first rotor blade might be in a position between 0deg and 360deg depending on the rotor position. More common in the wind industry is the definition following the clock. The 12h position is the position vertically upwards of the first rotor blade, the 6h position is the position vertically downward. Looking from the windward side on the rotor, the 3h position is the position horizontally to the right of the first rotor blade and the 9h position is the position horizontally to the left.

During routine service work, it is a big advantage to fix the rotor in a rotor lock position best suited for performing the planned service work. As an example, already the access of service personal to the rotor hub is easier, if the rotor is fixed in predefined positions. Maintenance work inside the rotor blade is often easiest if the rotor blade is placed in a horizontal position. Service work on components of the pitch system is easier, when the service personal can stand upright in front of the component to be serviced and if they do not need to work overhead or on the ground.

Allowing these multiple different rotor lock positions by fixing the high speed lock has many advantages: the high-speed lock is considerably smaller than the low-speed lock, so it is easier to handle for the service personal. It is also much safer to handle a small locking mechanism than a large one, as the risk of jamming hands or fingers is significantly reduced when handling small components. In addition, it is much easier to adjust the position of the high-speed shaft for applying the high-speed lock than adjusting the position of the rotor hub for applying the low-speed lock. All this advantageously results in a faster and safer procedure to apply the high-speed lock for routine service work compared to the application of the low-speed lock.

According to the invention, the low-speed lock is configured to fix the rotor hub in at most two different rotor positions, preferably exactly one single rotor lock position. To fix the rotor hub in at most two different rotor positions means that the hardware of the rotor lock is minimized in a way that a locking of the rotor hub is only possible in one or two rotor positions, which means that for example, fixing the rotor hub with the low-speed lock is only possible with blade one pointing vertically downward, the so called 6h position. If two positions are possible, it might be that blade one might be locked as an example in the vertically downward and the vertically upward position (so 6h and 12h) or, in an alternative embodiment of the invention for example in the horizontally right and horizontally left position (so 3h and 9h) or in another alternative embodiment of the invention for example only in the horizontally right position (so 3h). The big advantage of limiting the possible rotor lock positions of the low-speed lock is the significant reduction in hardware for the low-speed lock, resulting in less weight and easier manufacturing. In addition, service personal will use for most routine service works the high-speed lock which is easier and faster to apply and saves in this way time and money. Only in special service tasks on the drive train which cannot be performed with the high-speed lock, like maintenance work on the load transferring components between the high-speed lock and the rotor hub like couplings and inside the gearbox itself or maintenance on the high-speed lock itself, the more complicated low-speed lock will be used to fix the rotor hub. So it is the achievement of the inventor to have recognized, that in the vast majority of service cases a high-speed lock is a faster, safer and more economic device for locking the rotor hub and that for the few cases in which the high-speed lock cannot be applied, a much simpler and lighter low-speed lock allowing only one or two different rotor lock positions is the easiest and most economical solution.

Another aspect of the invention relates to a wind turbine comprising a tower (2), a nacelle (3) and the wind turbine drive train according to the invention.

Another aspect of the invention relates to a method of operating a wind turbine, the wind turbine comprising a wind turbine drive train comprising a plurality of rotor blades, a rotor hub, a gearbox, a high-speed lock and a low-speed lock. The low-speed lock is configured to fix the rotor hub in at most two different rotor lock positions, preferably exactly one single rotor lock position. The inventive method comprises the steps of operating the wind turbine for producing electrical energy, servicing the wind turbine for routine service work on the rotor hub or on the rotor blade using the high-speed lock for locking the rotor hub in multiple different rotor lock positions, and servicing the wind turbine drive train using the low-speed lock for fixing the rotor hub.

In the context of this disclosure the term "servicing" may be construed or may comprise at least one of the following: conducting an optical inspection at or in a component of a wind turbine, testing electrical or electronical components, reviewing or adjusting a position of components, cleaning or lubricating components, exchanging components subject to wear.

The same definitions and advantages discussed for the apparatus claim above apply respectively to the inventive method. The method is advantageous as for the frequent routine service work, the easy and safely to use high-speed lock will be used, and for service or maintenance work on the drive train, which includes a risk for the service personal when performed with the high-speed lock, the more difficult to apply low-speed lock is used. In one embodiment this applies for service or maintenance work on the load transferring components between the high-speed lock and the rotor hub like couplings and inside the gearbox itself or maintenance on the high-speed lock itself. So, the use of the inventive method leads advantageously to faster and more efficient service work with less risk for the service personal.

According to a preferred embodiment of the invention the low-speed lock comprises a rotor lock bolt and a lock hole or a sleeve configured to receive the rotor lock bolt. Using a rotor lock bolt and a hole is an easy and reliable way to allow for a form fit connection, which advantageously allows for best safety of the highly loaded low-speed lock. When the low-speed lock is applied, the bolt is received by the hole or the sleeve what means that the bolt is put through the hole or through the sleeve. Using a sleeve for receiving the rotor lock bolt is a good solution for allowing an easy repair. If the rotor lock bolt damages the sleeve, it can be easily exchanged what is not the case when using the solution of a simple hole.

In a preferred embodiment, the axis of the rotor lock bolt and the hole or the sleeve is parallel to the rotor axis. Advantageously, this allows for a better load carrying bahaviour compared to bolts which a mounted with the bolt axis non-parallel to the rotor axis.

Additionally or alternatively, the low-speed lock comprises exactly one or exactly two rotor lock bolts and/or the low-speed lock comprises exactly one or exactly two lock holes or sleeves. Using exactly one rotor lock bolt and one hole or sleeve is obviously the simplest way how to design the low-speed lock and might be advantageous as it minimizes the number of components and the required hardware. Using exactly two rotor lock bolts is an advantage for the load distribution, as the high loads coming out of the low-speed lock can be distributed in two spots, which can advantageously be distributed for example symmetrically on two sides of the nacelle. In addition, the use of two bolts reduces the required size of the bolt and makes it easier to handle the parts. As the size of the rotor lock bolts is quite important, it can even be a cost advantage to use two smaller rotor locking bolts instead of one larger rotor locking bolt. Using more than two rotor locking bolts has turned out in the past to be difficult, as it has to be assured that both rotor locking bolts are carrying the same load. So, they cannot be seen as redundancy, as if the load is so high that one bolt cracks, the second one will crack immediately after. Using exactly two lock holes or sleeves offers the same advantages as for the two bolts, with the difference that the loads will be distributed in two spots of the rotating part. In a preferred embodiment, always both rotor lock bolts are applied if the low-speed lock comprises two bolts, as only this allows for the full load bearing capacity of the applied low-speed lock and for an efficient design, as the size of the bolts can advantageously be reduced if they are always used simultaneously. It is of special interest that both combinations, one rotor lock bolt with two holes or sleeves and 2 rotor lock bolts with one hole or sleeve allow advantageously for two rotor lock positions. The latter would allow for some redundancy, for example if one of the bolts is stuck and cannot be applied by the e.g. hydraulic actuator, but the disadvantage is significantly larger costs for two rotor locking bolts. In a first advantageous embodiment of two rotor lock bolts with two holes or sleeve, the bolts and holes or sleeves are arranged on a straight line through the rotor axis and in the same radial distance of the rotation axis. This symmetrical 180deg arrangement allows for the full advantage of reduced rotor lock bolt size as both bolts will be applied at the same time as well as allowing two rotor lock positions as the rotor hub can be rotated about 180deg for the second rotor lock position where again the low-speed lock can be applied using both rotor lock bolts.

In a second advantageous embodiment of two rotor lock bolts with two holes or sleeve, the bolts and holes or sleeves are arranged on a straight line not crossing the rotor axis. In this embodiment, only a single rotor lock position is possible with both bolts applied as needed for the load bearing capacity of the low-speed lock. This embodiment allows advantageously for a better load path from the highly loaded rotor locking bolts to the support structure of the nacelle.

According to a preferred embodiment of the invention the rotor lock bolt is attached to a base frame or to a pillow block. Attaching the rotor lock bolt directly or indirectly to a base frame or to a pillow block advantageously allows for a direct load path for supporting the high loading resulting out of the low-speed lock. In some embodiments, the base frame is main frame of the nacelle, and the pillow block is a bearing housing for the rotor shaft. Attaching the rotor lock bolt to the main frame or to the bearing housing advantageously results in a very solid attachment of the rotor lock bolt.

According to a preferred embodiment of the invention the low-speed lock or parts of the low-speed lock are detachable and are mounted on the wind turbine drive train only when needed for the required service or maintenance work. This reduces advantageously the weight and the costs of the drive train as these detachable parts of the low-speed lock have only to be provided in a limited number for a wind turbine fleet as it is used as a service tool only when needed.

According to an alternative preferred embodiment of the invention the low-speed lock is permanently installed on the drive train. Permanently installed means that the low-speed lock or parts of the low-speed lock are not detached from the wind turbine drive train when not needed for service or maintenance work. This advantageously allows for faster and safer application of the low-speed lock as no preparation work needs be performed.

According to a preferred embodiment of the invention the lock hole or the sleeve is arranged in the casting of the rotor hub. In this embodiment, the hole or the sleeve is directly implemented in the casted body of the rotor hub or in a flange of the rotor hub. This allows advantageously for the most direct load path for fixing the rotor hub and minimizes the required hardware, such reducing the weight of the drive train.

According to a preferred embodiment of the invention the lock hole or the sleeve is arranged in a protrusion, wherein the protrusion is an integral part of a rotor shaft flange. By integrating the hole or the sleeve in a protrusion which is the same piece of hardware as the rotor shaft flange, a very simple and lightweight design is achieved. Advantageously, no lock plate mounted on the rotor shaft or rotor hub is needed which safes weight in the drive train. In addition, no additional interface or connection is needed, which increases the reliability of the low-speed lock. The protrusion of the rotor shaft flange is in a preferred embodiment a limited area of the rotor shaft flange, in which the outer diameter of the flange is increased. As there are only one or two protrusions on the rotor shaft flange, the transportation dimensions are significantly reduced in comparison to the usual lock plates with a larger number of lock holes attached to the rotor shaft. In a preferred embodiment, the protrusion and the rotor shaft flange are integrally casted, welded or forged. Casting the protrusion in one part with the rotor shaft flange allows especially for serial production a very economic production process. Welding the protrusion on the rotor shaft flange allows for an easy implementation of this solution even on already existing rotor shafts. Forging the protrusion and the rotor shaft flange in one piece advantageously allows for a very strong and reliable low-speed lock.

According to a preferred embodiment of the invention the high-speed lock is configured to lock the rotor hub in at least three different positions. The at least three different positions comprise a first locking position with a first rotor blade pointing in a vertically downward direction, a second locking position with the first rotor blade pointing in a horizontal direction and a third locking position with a second rotor blade pointing in a horizontal direction. As in usual wind turbine gearboxes the gear ration is larger than ten, one turn on the high-speed shaft is less than a tenth of the turn of the rotor hub, so a simple high-speed lock with one lock position on the high-speed shaft is allowing for at least ten rotor lock positions of the rotor hub.

During routine service work, different rotor positions allow for easier maintenance. Locking the rotor hub with the high-speed lock is the easiest and fastest possibility to lock the rotor hub in the preferred position. A rotor lock position with a first rotor blade pointing vertically downward, 6h position or also called the bunny ear position is advantageous in different situations. Firstly, it allows easy outside inspection with a working platform hanging on cables or ropes attached to the rotor hub, the tower or the nacelle. Furthermore, this is the best position in case a helicopter approaches the nacelle, for example to hoist replacement parts or service personal on the nacelle, as in this position, the two upward pointing rotor blades in the bunny ear or Y-position are least disturbing for the approaching helicopter. The position with the first rotor blade pointing in a horizontal direction is an advantageous position for inspecting the first rotor blade from the inside, as service people can walk without any effort inside the blade. The position with the second rotor blade pointing in a horizontal direction is an advantageous position for inspecting the second rotor blade from the inside.

According to a preferred embodiment of the invention the high-speed lock is configured to lock the rotor hub safely up to a first design wind speed and the low-speed lock is configured to lock the rotor hub safely up to a second design wind speed and the first and the second design wind speeds are different from each other. Usually, rotor locks are only designed to safely hold the rotor up to a certain wind speed, as in very high wind speed it is often preferred to release the rotor to idle, as this leads to lower loads on the rotor blades and the whole wind turbine. On the other hand, it is an advantage to be able to perform maintenance work also in high wind speeds to avoid that the service personal needs to wait until favorable weather conditions occur. As the high-speed lock is acting on the rotor hub with the multiplier effect of the gearbox, the torque which hast to be supported by the high-speed lock is usually a factor 10 to more than 100 lower than the torque which needs to be supported by the low-speed lock. Due to this reason a low-speed lock which is designed for a lower design wind speed than the high-speed lock saves a lot of material, weight and costs. For that reason, in a preferred embodiment of the invention, the design wind speed for the low-speed lock is lower than the design wind speed of the high-speed lock.

On the other hand, routine service work like rotor hub and rotor blade inspection is much easier to plan and schedule than unplanned maintenance work like a gearbox exchange after a gearbox failure. Therefore, in an alternative preferred embodiment, the design wind speed for the high-speed lock is lower than the design wind speed of the low-speed lock. This allows advantageously that after an unpredicted gearbox failure, the rotor hub can be safely locked under high wind speeds using the low-speed lock.

According to a preferred embodiment of the method of operating the wind turbine, the step of servicing the wind turbine for routine service work comprises the steps of transferring service personal inside the rotor hub and performing service work inside the rotor hub or inside one of the rotor blades, as already discussed above. It is an advantage to apply the high-speed lock for these routine service work as the high-speed lock is easier, safer and faster to apply.

According to a preferred embodiment of the invention the step of servicing the wind turbine for routine service work comprises at least two of the steps of rotating the rotor hub in a position that a first rotor blade is positioned in a vertically downward or a horizontal position, performing service work inside the first rotor blade or on the outside of the first rotor blade, rotating the rotor hub in a position that a second rotor blade is positioned in a vertically downward or horizontal position, or performing service work inside the second rotor blade or on the outside of the second rotor blade. As already mentioned before, for certain service work it is preferred to position the rotor hub in a predetermined position, like a position with the rotor blade to be serviced placed in a horizontal position, as this is especially advantageously for service work from inside or with the rotor blade to be serviced placed in a vertically downward pointing position (6h position) as this allows for easiest access from outside with working platforms or even rope climbers. To lock the rotor hub in these routine service rotor lock positions is especially easy and safe using the high-speed lock instead of the low-speed lock. Preferably at least three, most preferably all four of the afore mentioned steps are performed in the method, allowing advantageously to provide service work on two, preferably all rotor blades of the wind turbine in an easy and efficient manner.

According to a preferred embodiment of the method of operating the wind turbine, the step of servicing the wind turbine drive train comprises at least one of the steps of performing service work on the connection between the rotor shaft and the gearbox, performing service work on the high-speed lock, performing service work inside the gearbox, demounting components of the gearbox, or demounting the complete gearbox. Servicing the drive train comprising one of the mentioned steps cannot or only with considerable risk be performed using the high-speed lock, as even if the high-speed lock is applied, it cannot be excluded that the components to be serviced are under considerable loads, though putting at risk service personal working on these components. But it is an achievement of the inventor to have recognized, that for these service activities, the rotor position in which the rotor hub is locked is from minor importance. So, it is a big advantage of the invention, that the rotor hub for these drive train service work is locked with a simpler low-speed lock as known in the state of the art, as this simpler low-speed lock advantageously allows for the same safety level without requiring the complicated low-speed lock allowing for more than one or two rotor positions.

According to a preferred embodiment of the method of operating the wind turbine, in particular an offshore wind turbine, further in particular a floating offshore wind turbine, and/or for feeding electrical and/or chemical energy to an electricity and/or chemical grid is provided, comprising the steps generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen, transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and supplying, at least partially, the electrical power, the electrical energy, and/or the chemical energy to an electrical and/or chemical utility grid, in particular to an onshore electrical and/or chemical utility grid and/or chemical/electrical storage.

According to a preferred embodiment of the method of operating the wind turbine, in particular an offshore wind turbine, further in particular a floating offshore wind turbine, and/or for feeding electrical and/or chemical energy to an electricity and/or chemical grid, is provided, the method comprising the steps: operating a drive train, generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen, transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and supplying, at least partially, the electrical power, the electrical energy, and/or the chemical energy to an electrical and/or chemical utility grid, in particular to an onshore electrical and/or chemical utility grid and/or chemical/electrical storage.

Additionally and/or alternatively a further aspect is disclosed, and/or in particular as an embodiment of one of a precedingly described aspect(s) and/or embodiment(s), namely, a method for operating a wind turbine, in particular an offshore wind turbine, further in particular a floating offshore wind turbine, and/or for feeding electrical and/or chemical energy to an electricity and/or chemical grid, the method comprising the following steps:
executing steps of an embodiment or of a combination of embodiments of a method as disclosed supra, and/or operating an embodiment of a device as disclosed supra;
generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen;
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and
supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It has to be noted that embodiments of the invention have been described with reference to different subject matters. In particular, some embodiments have been described with reference to apparatus type subject matter, such as a wind turbine drive train for transmitting torque from a rotor hub to a generator, whereas other embodiments have been described with reference to method type subject matter, such as the method of operating the wind turbine. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

In order to facilitate the understanding of the characteristics of the invention and being an integral part of this specification, some drawing sheets are attached on which figures, with an illustrative but not limiting character, the following is represented:
Figure 1 shows a wind turbine with a wind turbine drive train for transmitting torque from a wind rotor to a generator according to the invention.
Figure 2 shows schematically a wind turbine drive train according to the invention.
Figure 3 shows an embodiment of a rotor shaft as known in the prior art.
Figure 4 shows an embodiment of a rotor shaft according to the invention.
Figure 5 shows a front view of an embodiment of a rotor shaft with a pillow block according to the invention.

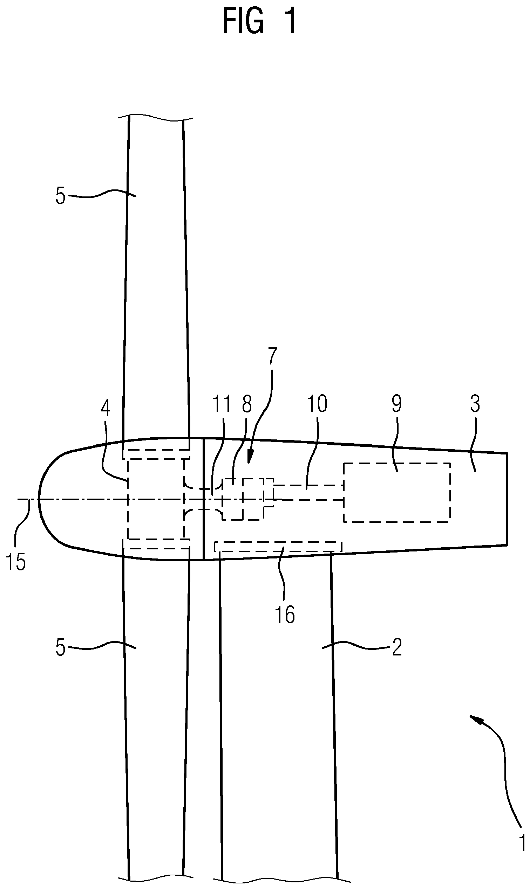

Figure 1 shows a wind turbine 1 with a tower 2 and a nacelle 3 comprising a wind turbine drive train **7.** Rotatably attached to the nacelle 3 is a wind rotor with a rotor hub 4 with a plurality of rotor blades **5.** The torque generated by the wind rotor is transmitted via the rotor shaft 11 to the gearbox **8.** The rotor shaft 11 turns around the rotor axis 15. The output torque of the gearbox 8 is transmitted via the high-speed shaft 10 to the generator 9 to produce electricity. The drive train 7 is supported by a base frame 16 which is rotatably attached to the tower 2.

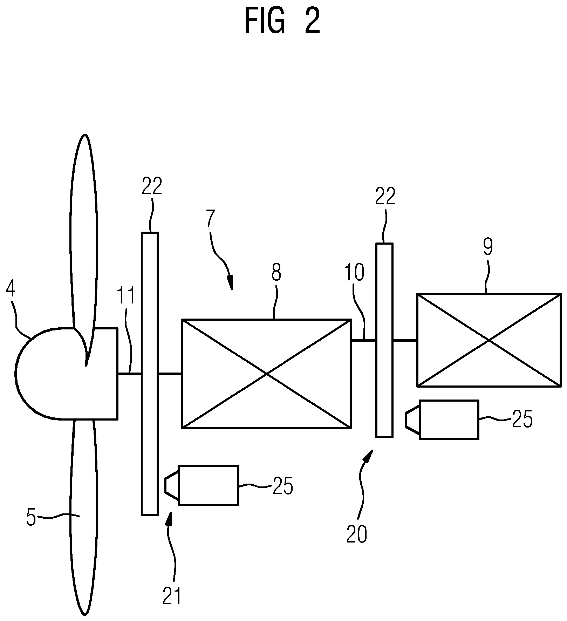

Figure 2 shows a wind turbine drive train 7 comprising a rotor shaft 11, a low-speed lock 21, a gearbox 8, a high-speed shaft 10 and a high-speed lock 20. In the shown embodiment, the low-speed lock 20 is acting with a rotor lock bolt 25 on a lock plate 22 attached to the rotor shaft 11. In other embodiments, the rotor lock bolt 25 acts directly on the rotor hub 4 or on a lock plate 22 attached to the rotor hub 4. The low-speed lock 21 is configured to fix the rotor hub 4 in exactly one or exactly two rotor lock positions, so at most in two different rotor lock positions, which means in two different angular positions of the rotor hub 4 around the rotor axis 15. In the shown embodiment, the low-speed lock 21 comprises exactly one rotor lock bolt 25, in other embodiments, it comprises exactly two rotor lock bolts 25. The lock plate 22 comprises exactly one lock hole 24 (not visible) or in other embodiments exactly two lock holes 24 for receiving the rotor lock bolt 25. The high-speed lock 20 comprises a rotor lock bolt 25 acting on a lock plate 22, in the shown embodiment attached to the high speed shaft 10. The high-speed lock 20 may in other embodiments act directly on the generator 9. The high-speed lock is configured to lock the rotor hub 4 in multiple different rotor lock positions. According to the invention it is foreseen to operate the wind turbine 1 with the wind turbine drive train 7 for producing electrical energy. For routine service work on the wind rotor including the rotor hub 4 and the rotor blades 5, the high-speed rotor lock 20 is applied to fix the rotor hub 4 in the best suited rotor lock position. For certain service work, this might be the rotor lock position as shown in figure 2 with a first rotor blade 5 pointing in the vertically downward position. If the service work on the first rotor blade 5 is completed, the high-speed lock 20 will be released and the rotor hub 4 will be repositioned so that a second rotor blade 5 points in the vertically downward position. The high-speed lock 20 will be applied again and service work on the second rotor blade 5 can be performed. On a wind turbine 1 with three rotor blades 5, the same procedure will be performed for the third rotor blade 5. Afterwards, the high-speed lock 20 will be released, and the wind turbine 1 will be operated again for producing electrical energy.

For other service work, is will be advantageous to fix the rotor hub 4 with a rotor blade 5 pointing horizontally using the high-speed lock 20 and to use the same method as just described. For servicing the wind turbine drive train 7, the low-speed lock 21 will be applied. This more complicated procedure is needed for example for performing service work on the connection between the rotor shaft 11 and the gearbox 8, on the high-speed lock 20, in the gearbox 8 or for demounting parts of the gearbox 8 or the complete gearbox 8. As can be easily seen in the Fig. 2, all these service and maintenance works are on components which are in the load path between the rotor hub 4 and the high-speed lock 20. So, working on these components would endanger the service personal as loads coming out of the rotor blades 5 will pass through the components if the rotor hub 4 is fixed with the high-speed lock 20, thus being a safety hazard for the service people. As the safety of the service people is ensured if the rotor hub 4 is fixed with the low-speed lock 21, no matter in which rotor position, the invention advantageously improves the wind turbine drive train 7 and the method to operate a wind turbine 1 as known in the state of the art.

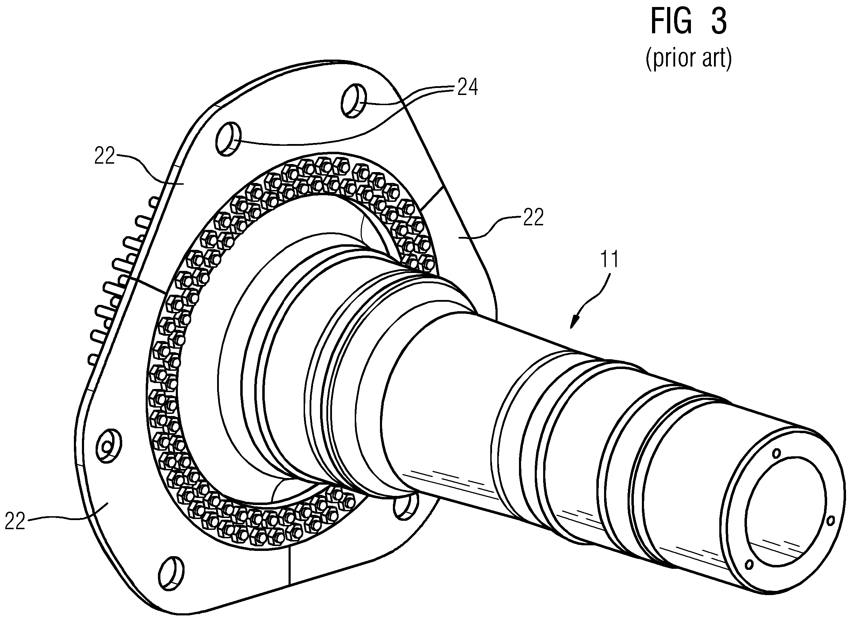

Figure 3 shows a rotor shaft 11 as known in the prior art. Attached to the rotor shaft 11 is a rotor lock plate 22 comprising three parts. The rotor lock plates 22 comprise in total six lock holes 24, allowing the rotor hub 4 to be locked in multiple different rotor lock positions. The massive rotor lock plates 22 are adding a lot of weight to the wind turbine drive train 7 and need to be fixed to the rotor shaft 11 with a large number of bolts to be able to transfer the large loads from the low-speed lock 21 to the rotor shaft 11.

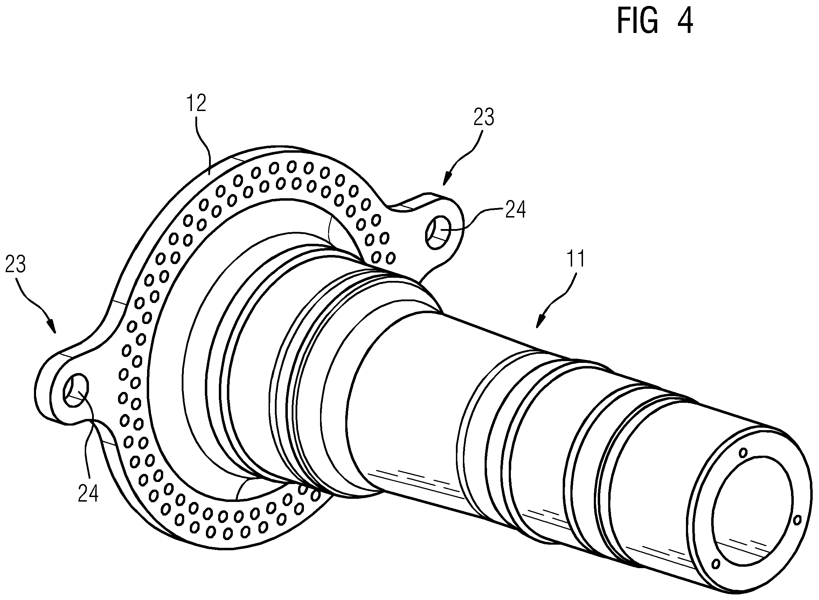

Figure 4 shows a rotor shaft 11 according to the invention. Two protrusions 23 are casted directly on the rotor shaft flange 12. In the shown embodiment, the rotor shaft 11, the rotor shaft flange 12 and the two protrusions 23 are casted or forged in one piece. In other embodiments, the protrusions 23 might be welded onto the rotor shaft flange 12. In some embodiments, the rotor shaft 11 and the rotor shaft flange 12 might be two parts joined together. When comparing Fig. 3 and Fig. 4, it is obvious that the inventive design of Fig. 4 saves a lot of weight and complexity compared to the prior art of Fig. 3. In addition, the transport dimensions of the inventive embodiment shown in Fig. 4 are much easier to handle than the prior art shown in Figure 3.

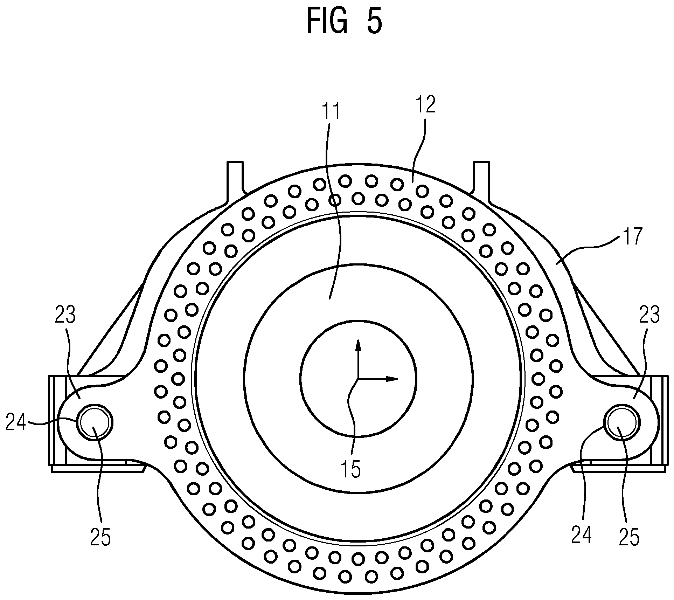

Figure 5 shows a rotor shaft 11 including a pillow block 17 shown in a front view. The rotor shaft flange 12 comprising two rows of bolt holes for connection to the rotor hub 4 (not shown) has on the left and on the right side a protrusion 23 with a lock hole 24. In the shown embodiment, the two protrusions 23 are directly casted with the rotor shaft flange 12. In other embodiments, the protrusions 23 might be directly casted with a flange of the rotor hub 4, or the lock holes 24 or sleeves are directly integrated in the rotor hub 4. Inside both lock holes 24 the two rotor lock bolts 25 are visible. So the shown embodiment has exactly two lock holes 24 and exactly two rotor lock bolts 25. The axis of the rotor lock bolt 25 and the axis of the lock holes 24 are parallel to the rotor axis 25. As in the shown embodiment a straight line through the lock holes 24 does not cross the rotor axis 15, the lock holes 24 are not arranged in a 180deg position on the rotor shaft flange 12. As both rotor bolts 25 are required to safely fix the rotor hub 4, the shown embodiment allows only exactly one rotor lock position. In other embodiments, the two lock holes 24 can be arranged in an 180deg angle on the rotor shaft flange 12, thus allowing for exactly two rotor lock positions. The lock holes 24 are arranged with a downwards offset compared with a symmetric 180deg arrangement, which advantageously results in a better load path to the base frame 16 (not shown), on which the pillow block 17 will be attached. In the shown embodiment, the rotor lock bolts 25 are both attached to the pillow block 17. In other embodiments, the rotor lock bolts 25 will be arranged directly on the base frame 16. The protrusions 24 and the rotor lock bolts 25 are not adapted to be easily removable, so they are permanently installed on the wind turbine drive train 7 to allow for an easy and fast application of the low-speed lock 21 when needed.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### Reference list

- 1: Wind Turbine
- 2: Tower
- 3: Nacelle
- 4: Rotor Hub
- 5: Rotor Blade
- 7: Wind Turbine Drive Train
- 8: Gearbox
- 9: Generator
- 10: High-Speed Shaft
- 11: Rotor Shaft
- 12: Rotor Shaft Flange
- 15: Rotor Axis
- 16: Base Frame
- 17: Pillow Block
- 20: High-Speed Lock
- 21: Low-Speed Lock
- 22: Lock Plate
- 23: Protrusion
- 24: Lock Hole
- 25: Rotor Lock Bolt

## Claims

1. A wind turbine drive train (7) for transmitting torque from a rotor hub (4) to a generator (9) comprising
a rotor shaft (11), a low-speed lock (21) acting on the rotor hub (4) or on the rotor shaft (11), a gearbox (8), a high-speed shaft (10), and a high-speed lock (20) acting on the high-speed shaft (10) or on the generator (9),
wherein the high-speed lock (20) is configured to fix the rotor hub (4) in multiple different rotor lock positions,
wherein the low-speed lock (21) is configured to fix the rotor hub (4) in at most two different rotor positions, preferably exactly in one single rotor lock position.

2. The wind turbine drive train (7) according to the previous claim,
wherein the low-speed lock (21) comprises a rotor lock bolt (25) and a lock hole (24) or a sleeve configured to receive the rotor lock bolt (25), and/or
wherein the low-speed lock (21) comprises exactly one or exactly two rotor lock bolts (25), and/or
wherein the low-speed lock (21) comprises exactly one or exactly two lock holes (24) or sleeves.

3. The wind turbine drive train (7) according to the previous claim, wherein the rotor lock bolt (25) is attached to a base frame (16) or to a pillow block (15).

4. The wind turbine drive train (7) according to claim 2 to 3, wherein the lock hole (24) or the sleeve is arranged in the casting of the rotor hub (4).

5. The wind turbine drive train (7) according to claim 2 to 3, wherein the lock hole (24) or the sleeve is arranged in a protrusion (23), wherein the protrusion (23) is an integral part of a rotor shaft flange (12), wherein in particular the protrusion (23) and the rotor shaft flange (12) are integrally casted, welded or forged.

6. The wind turbine drive train (7) according to one of the previous claims, wherein the low-speed lock (21) is permanently installed on the drive train (7).

7. The wind turbine drive train (7) according to one of the previous claims, wherein the high-speed lock (20) is configured to lock the rotor hub (4) in at least three different positions, wherein the at least three different positions comprise a first locking position with a first rotor blade (5) pointing in a vertically downward direction, a second locking position with the first rotor blade (5) pointing in a horizontal direction and a third locking position with a second rotor blade (5) pointing in a horizontal direction.

8. The wind turbine drive train (7) according to one of the previous claims, wherein the high-speed lock (20) is configured to lock the rotor hub (4) safely up to a first design wind speed and the low-speed lock (21) is configured to lock the rotor hub (4) safely up to a second design wind speed, wherein the first and the second design wind speeds are different from each other.

9. A wind turbine (1) comprising a tower (2), a nacelle (3) and a drive train (7) according to any of the preceding claims.

10. A method of operating a wind turbine (1), in particular according to the preceding claim, the wind turbine (1) comprising a wind turbine drive train (7) comprising a plurality of rotor blades (5), a rotor hub (4), a gearbox (8), a high-speed lock (20) and a low-speed lock (21), wherein the low-speed lock (21) is configured to fix the rotor hub (4) in at most two different rotor lock positions, preferably exactly one single rotor lock position, comprising the steps of:
operating the wind turbine (1) for producing electrical energy;
servicing the wind turbine (1) for routine service work on the rotor hub (4) or on the rotor blade (5) using the high-speed lock (20) for locking the rotor hub (4) in multiple different rotor lock positions, and
servicing the wind turbine drive train (7) using the low-speed lock (21).

11. The method of operating a wind turbine (1), according to the previous claim, wherein the step of servicing the wind turbine (1) for routine service work comprises the steps of
transferring service personal inside the rotor hub (4), and
performing service work inside the rotor hub (4) or inside one of the rotor blades (5).

12. The method of operating a wind turbine (1), according to claim 10 or 11, wherein the step of servicing the wind turbine (1) for routine service work comprises at least two of the steps of
rotating the rotor hub (4) in a position that a first rotor blade (5) is positioned in a vertically downward or a horizontal position,
performing service work inside the first rotor blade or on the outside of the first rotor blade (5),
rotating the rotor hub (4) in a position that a second rotor blade (5) is positioned in a vertically downward or horizontal position, or
performing service work inside the second rotor blade or on the outside of the second rotor blade (5).

13. The method of operating a wind turbine (1), according to claim 10 to 12, wherein the step of servicing the wind turbine drive train (7) comprises at least one of the steps of
performing service work on the connection between the rotor shaft (11) and the gearbox (8),
performing service work on the high-speed lock (20),
performing service work inside the gearbox (8),
demounting components of the gearbox (8), or
demounting the complete gearbox (8).

14. A method for operating a wind turbine (1) according to one of the claims 1 to 9), in particular an offshore wind turbine, further in particular a floating offshore wind turbine, and/or for feeding electrical and/or chemical energy to an electricity and/or chemical grid, , the method comprising the following steps:
generating, by the wind turbine (), electrical power and/or electrical energy, and in particular generating at least partially from the electrical energy, further in particular, by transforming electrical energy into hydrogen by electrolysis, chemical energy in form of a gas or liquid, in particular in the form of hydrogen;
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and
supplying, at least partially, the electrical power, the electrical energy, and/or the chemical energy to an electrical and/or chemical utility grid, in particular to an onshore electrical and/or chemical utility grid and/or chemical/electrical storage.

15. A method for operating a wind turbine (1), in particular an offshore wind turbine, further in particular a floating offshore wind turbine, and/or for feeding electrical and/or chemical energy to an electricity and/or chemical grid, the method comprising the following steps:
operating a wind turbine according to the method of one of the claims 10 to 13,
generating, by the wind turbine (), electrical power and/or electrical energy, and in particular generating at least partially from the electrical energy, further in particular, by transforming electrical energy into hydrogen by electrolysis, chemical energy in form of a gas or liquid, in particular in the form of hydrogen;
transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and
supplying, at least partially, the electrical power, the electrical energy, and/or the chemical energy to an electrical and/or chemical utility grid, in particular to an onshore electrical and/or chemical utility grid and/or chemical/electrical storage.
